# EUROPEAN PATENT SPECIFICATION

(11) **EP 3 037 284 B1**
(45) Date of publication and mention of the grant of the patent: **28.08.2019**
(21) Application number: 15200551.8
(22) Date of filing: 16.12.2015
(51) Int. Cl.: B60C 15/00, B60C 9/08, B60C 9/12, B60C 9/09

(54) **REDUCED WEIGHT AIRCRAFT TIRE**
FLUGZEUGREIFEN MIT REDUZIERTEM GEWICHT
PNEU D'AÉRONEF À POIDS RÉDUIT

(30) Priority: 22.12.2014 US 201414578997
(43) Date of publication of application: 29.06.2016
(73) Proprietor: The Goodyear Tire & Rubber Company, Akron, Ohio 44316 (US)
(72) Inventor: UEYOKO, Kiyoshi, Copley, OH 44321 (US)
(74) Representative: Kutsch, Bernd

(56) References cited:
- EP-A2- 0 396 494
- US-A- 4 832 103
- US-A- 4 962 803
- US-A1- 2012 043 002

## Description

### Field of the Invention

This invention relates to pneumatic tires having a carcass and a belt reinforcing structure, more particularly to high speed heavy load tires such as those used on aircraft.

### Background of the Invention

The radial carcass reinforcements of aircraft tires generally comprise several plies of textile cords, which are anchored to at least one annular bead member. A first group of reinforcing plies are generally wound around said annular bead member from the inside to the outside, forming turn-ups, the respective ends of which are radially spaced from the axis of rotation of the tire. The second group of plies are generally wound around the annular bead member from the outside to the inside of the tire.

Aircraft tires typically use numerous layers of ply which can significantly contribute to the tire weight. The numerous layers of ply may result in bead durability issues. It is thus desired to provide a lightweight efficient tire structure having improved bead durability. It is a further desired to provide an improved bead structure wherein the use of inside turn-up plies and outside turndown plies and their respective locations are optimized. Thus an improved aircraft tire is needed, which is capable of meeting high speed, high load and with reduced weight.

US-A-2012/043002 describes a pneumatic tire in accordance with the preamble of claim 1.

### Summary of the Invention

The invention relates to a tire in accordance with claim 1.

Dependent claims refer to preferred embodiments of the invention.

In a preferred aspect of the invention, a pneumatic tire is disclosed having a carcass, a belt reinforcing structure and an inner liner. The carcass comprises at least two inner plies which are wound around a annular bead member from axially inside of the annular bead member toward axially outside thereof and extends radially outward towards the crown to form respective turnup portions; at least one outer carcass ply that extends radially inward from the crown and axially outward of the annular bead member and being partially wrapped around the bead terminating in an ending; a barrier ply located between the inner liner and the axially innermost inner ply, the barrier ply having a first end which terminates in the shoulder area of the tire and a second end that has a terminal end positioned under the outer carcass ply.

### Definitions

"100 percent Modulus" means the force in MegaPascals (MPa) required to produce 100 percent elongation (e.g., stretch to two times original length).

"300 percent Modulus" or "M300 modulus" means the force in MegaPascals (MPa) required to produce 300 percent elongation (e.g., stretch to four times original length).

"Apex" means an elastomeric filler located radially above the bead core and between the plies and the turnup ply or axially outside the turnup ply.

"Axial" and "axially" are used herein to refer to lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt structure" means at least two annular layers or plies of parallel cords, woven or unwoven, underlying the tread, unanchored to the bead, and having cords inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Chafer" refers to a narrow strip of material placed around the exterior of the bead to protect bead structures from the rim, distribute flexing radially above the rim, and to better seal the tire to the rim.

"Chipper" refers to a narrow band of fabric or steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire comprise.

"Cord angle" means the acute angle, left or right in a plan view of the tire, formed by a cord with respect to the equatorial plane. The "cord angle" is measured in a cured but uninflated tire.

"Crown" means that portion of the tire within the width limits of the tire tread.

"Denier" means the weight in grams per 9000 meters (unit for expressing linear density). Dtex means the weight in grams per 10,000 meters.

"Density" means weight per unit length.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a high modulus material.

"Fiber" is a unit of matter, either natural or man-made that forms the basic element of filaments. Characterized by having a length at least 100 times its diameter or width.

"Filament count" means the number of filaments that make up a yarn. Example: 1000 denier polyester has approximately 190 filaments.

"Flipper" refers to a reinforcing fabric around the bead wire for strength and to tie the bead wire in the tire body.

"Gauge" refers generally to a measurement, and specifically to a thickness measurement.

"Inner" means toward the inside of the tire and "outer" means toward its exterior.

"Innerliner" means the layer or layers of elastomer or other material that form the inside surface of a tubeless tire and that contain the inflating fluid within the tire.

"Lateral" means an axial direction.

"Ply" means a cord-reinforced layer of rubber-coated radially deployed or otherwise parallel cords.

"Radial" and "radially" are used to mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

"Radial Ply Tire" means a belted or circumferentially-restricted pneumatic tire in which at least one ply has cords which extend from bead to bead are laid at cord angles between 65° and 90° with respect to the equatorial plane of the tire.

"Sidewall" means that portion of a tire between the tread and the bead. "Tread width" means the arc length of the tread surface in a plane including the axis of rotation of the tire.

### Brief Description of the Drawings

The invention will be described by way of example and with reference to the accompanying drawings in which:
FIG. 1 is a schematic cross-sectional view of a first embodiment of one-half of a tire according to the invention; and

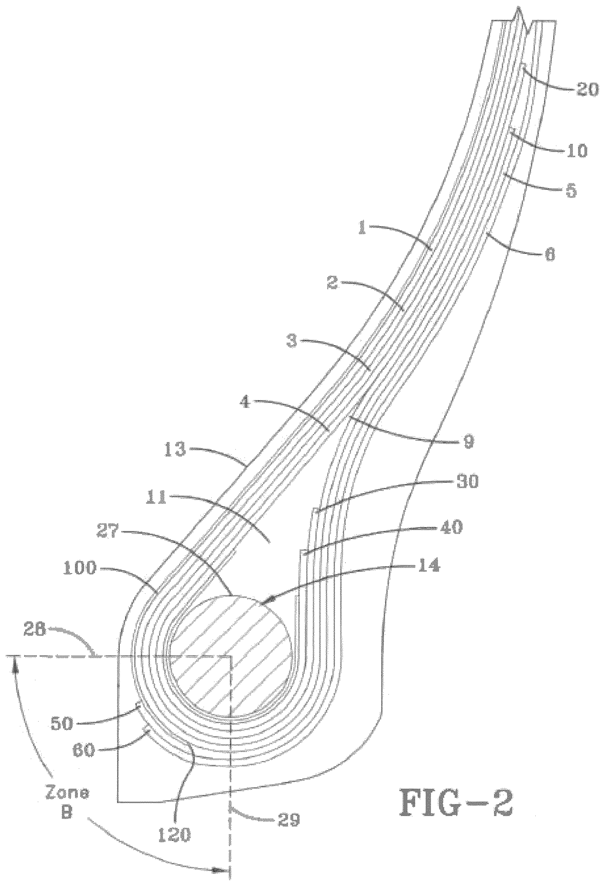

FIG. 2 is a close up cross-sectional view of the bead area of the tire of Fig. 1.

### Detailed Description of Example Embodiments the Invention

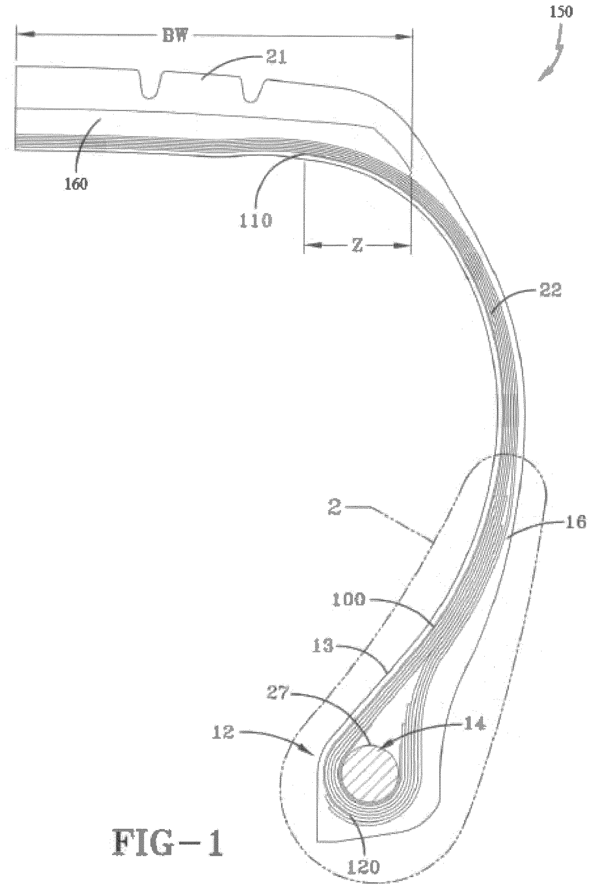

Figure 1 illustrates a cross-sectional view of one half of a tire 150 as a radial aircraft tire in accordance with the present invention. The tire 150 is preferably symmetrical about the mid-circumferential plane so that only one half is illustrated. As shown, the aircraft tire comprises a pair of bead portions 12 each containing an annular bead member or bead core 14 embedded therein. A person skilled in the art may appreciate that other annular bead members may also be utilized.

The aircraft tire 150 further comprises a sidewall portion 16 extending substantially outward from each of the bead portions 12 in the radial direction of the tire, and a tread 21 extending between the radially outer ends of the sidewall portions 16. Furthermore, the tire 150 comprises a belt structure 160 and is reinforced with a carcass 22 toroidally extending from one of the bead portions 12 to the other bead portion 12. An air impervious inner liner 13 is located on the inner surface of the carcass 22. The carcass 22 comprise at least two axially inner carcass plies 1, 2 and more preferably an additional two axially inner carcass plies 3, 4, and outer carcass down plies 5, 6. Among these carcass plies, typically four axially inner plies 1, 2, 3, 4 extend radially inward from the crown towards the bead area. The axially inner plies 1, 2, 3, 4 are wound around the annular bead member 14 from axially inside of the annular bead member toward axially outside thereof and extends radially outward towards the crown to form respective turnup portions 10, 20, 30, 40. Preferably, the ply adjacent the bead 4 has a turnup 40 that is located between the bead outer radial surface 27 and the outer radial end or tip 9 of an apex 11.

The carcass further comprises at least two axially outer plies 5, 6 which extend radially inward from the crown and are axially outward of the annular bead member 14 along the outside of the turnup portion 10 of the inner carcass ply 1. The two outer carcass plies 5, 6 extend down from the crown and further extend axially outward and are wrapped around the bead terminating in endings 50, 60, respectively. Preferably, one of the endings 50, 60 overlap with the one or more inner plies and has a terminal end in zone B. Preferably, two of the endings 50, 60 overlap with the one or more inner plies and have a terminal end in zone B. Zone B is defined by a first axial plane 28 that intersects the bead core center point, and wherein the first plane 28 is parallel to the tire axis of rotation. Zone B is further defined by a second plane 29 that is perpendicular to the first axial plane 28 and intersects the bead core center. Zone B is further defined as being radially inward of the first axial plane 28 and axially inward of the second plane 29.

Each of these carcass plies 1-6 may comprise any suitable cord, typically nylon cords such as nylon-6,6 cords extending substantially perpendicular to an equatorial plane EP of the tire (i.e. extending in the radial direction of the tire). Preferably, the nylon cords have an 1890 denier/2/2 or 1890 denier/3 construction. One or more of the carcass plies may also comprise an aramid and nylon cord structure, for example, a hybrid cord, a high energy cord or a merged cord. Examples of suitable cords are described in US-A-4,893,665, US-A-4,155,394 or US-B-6,799,618. One or more of the carcass plies have reinforcements that make an angle with respect to the equatorial plane in the range of 70-90 degrees, more preferably 80-90, and most preferably 88 degrees.

Located between the inner liner 13 and the axially innermost carcass ply 1 is a barrier ply layer 100 (which may also be called interface ply layer 100). The barrier ply layer 100 functions to ensure even spacing among the inner plies or inner ply cords. Hence, the barrier ply layer 100 is an interface layer between the inner liner 13 and the axially innermost carcass ply 1 for providing a more even spacing amongst the adjacent inner plies 1, 2 (and optionally plies 3 and 4). In one embodiment, the barrier ply layer 100 has a first end 110 that terminates in the shoulder area and does not extend under the crown. Preferably, the first end 110 terminates axially inward of the narrowest belt axially outer end. More preferably, the first end 110 terminates axially inward an axial distance Z as measured from the axially outermost belt edge. Z ranges from 0.1*Bw to 0.25*Bw, wherein BW is the maximum belt width. The barrier ply has a second end 120 that is tucked under down ply ending 50, and is located between the axially innermost ply 1 and the down ply ending 50. Thus, in one embodiment, the barrier ply does not extend under the crown portion of the tire. However, in an alternate embodiment, the barrier ply may extend under the crown from one bead to the other. The barrier ply has a plurality of parallel reinforcements that make an angle with respect to the equatorial plane in the range of 70-90 degrees, more preferably 80-88 degrees, and most preferably 84-88 degrees. The cord strength of the barrier layer reinforcements is less than the carcass plies. The barrier ply may have a thickness less than or equal to the carcass plies. The barrier ply 100 functions to minimize non-uniformity of the ply cord spacing and inner ply cord distortion during the shaping process.

## Claims

1. A pneumatic tire having a carcass (22) and a belt structure (160), the carcass (22) comprising an inner liner (13), at least two inner plies (1, 2, 3, 4) which are wound around a annular bead member (14) from axially inside of the annular bead member (14) toward axially outside thereof and which extend radially outward of the annular bead member (14) towards the tire crown to form respective turnup portions (10, 20, 30, 40), and at least one outer carcass ply (5, 6) that extends radially inward from the crown and axially outward of the annular bead member (14), wherein the at least one outer carcass ply (5, 6) is only partially wrapped around the annular bead member (14) and terminates in an ending (50, 60), and wherein a barrier ply (100) is located between the inner liner (13) and the axially innermost inner ply (1, 2, 3, 4), and wherein at least one outer ply (5, 6) has a terminal end located in a zone B, wherein zone B is defined by a first plane (28) that intersects the center point of the annular bead member (14) and that is parallel to the axis of rotation of the tire and by a second plane (29) that is perpendicular to the first plane (28) and intersects the center point of the annular bead member (14) and wherein zone B is radially inward of the first plane (28) and axially inward of the second plane (29), **characterized in that** the barrier ply (100) has a second end (120) located in zone B.

2. The pneumatic tire of claim 1 wherein the barrier ply (100) has a first end (110) in the shoulder area of the tire (150).

3. The pneumatic tire of claim 1 or 2 wherein the barrier ply (100) has a first end (110) located axially inward of the axially outermost belt edge of the belt structure (160).

4. The pneumatic tire of at least one of the previous claims wherein the barrier ply (100) has a second end (120) located between the axially innermost inner ply (1) and the outer carcass ply (5) or the ending (50, 60) of the outer carcass ply (50).

5. The pneumatic tire of at least one of the previous claims wherein the barrier ply (100) has a second end (120) located radially inward of the annular bead member (14).

6. The pneumatic tire of at least one of the previous claims wherein the barrier ply (100) has a plurality of parallel reinforcements that make an angle with respect to the equatorial plane of the tire (150) in the range of from 70-90 degrees or in a range of from 80 to 88 degrees.

7. The tire of at least one of the previous claims wherein the barrier ply (100) has a first end (110) that terminates axially inward of the axially outer end of the axially narrowest belt ply of the belt structure (160) a distance Z as measured from the axially outermost belt edge of the belt structure (160), wherein Z ranges from 0.1* BW to 0.25*BW, wherein BW is the maximum axial width of the belt structure (160).

8. The pneumatic tire of claim 7 wherein Z ranges from 0.15* BW to 0.20*BW.

9. The pneumatic tire of claim 1 wherein the tire (150) has two outer plies (5, 6) which both have a terminal end located in the zone B.

10. The pneumatic tire of claim 1 or 9 wherein the barrier ply (100) has the second end (120) located axially outward of the terminal end of the at least one outer ply (5, 6) or axially outward of the terminal end of all outer plies (5, 6).

11. The pneumatic tire of at least one of the previous claims wherein the barrier ply (110) has a thickness less than or equal to the thickness of the axially innermost inner ply (1, 2, 3, 4) or the thickness of at least one of the inner plies (1, 2, 3, 4), or wherein the barrier ply (110) has a thickness in a range of from 10 to 60 percent or 10 to 30 percent of the thickness of the axially innermost inner ply (1, 2, 3, 4).

12. The pneumatic tire of at least one of the previous claims wherein the tire comprises four axially inner plies (1, 2, 3, 4).

13. The pneumatic tire of at least one of the previous claims wherein the ply cord of at least one and of preferably all of the carcass plies (1, 2, 3, 4, 5, 6) is or comprises nylon.

14. The pneumatic tire of at least one of the previous claims wherein the tire (150) is an aircraft tire, preferably a radial aircraft tire.

## Patentansprüche

1. Luftreifen mit einer Karkasse (22) und einer Gürtelstruktur (160), wobei die Karkasse (22) Folgendes umfasst: eine Innenabdichtung (13), wenigstens zwei innere Lagen (1, 2, 3, 4), die um ein ringförmiges Wulstelement (14) von dem ringförmigen Wulstelement (14) axial innenliegend zu axial außenliegend davon gewunden sind und die sich von dem ringförmigen Wulstelement (14) radial nach außen in Richtung des Reifenscheitels erstrecken, um jeweilige Umschlagabschnitte (10, 20, 30, 40) auszubilden, und wenigstens eine äußere Karkassenlage (5, 6), die sich von dem Scheitel radial nach innen und von dem ringförmigen Wulstelement (14) radial nach außen erstreckt, wobei die wenigstens eine äußere Karkassenlage (5, 6) nur teilweise um das ringförmige Wulstelement (14) gewickelt ist und in einer Endung (50, 60) abschließt, und wobei eine Sperrlage (100) zwischen der Innenabdichtung (13) und der axial innersten inneren Lage (1, 2, 3, 4) gelegen ist und wobei wenigstens eine äußere Lage (5, 6) ein Abschlussende aufweist, das in einem Bereich B gelegen ist, wobei der Bereich B durch eine erste Ebene (28), die den Mittelpunkt des ringförmigen Wulstelements (14) kreuzt und die parallel zu der Drehachse des Reifens ist, und durch eine zweite Ebene (29) definiert ist, die senkrecht zu der ersten Ebene (28) ist und den Mittelpunkt des ringförmigen Wulstelements (14) kreuzt, und wobei Bereich B von der ersten Ebene (28) radial nach innen und von der zweiten Ebene (29) radial nach außen ist, **dadurch gekennzeichnet, dass** die Sperrlage (100) ein zweites Ende (120) aufweist, das in Bereich B gelegen ist.

2. Luftreifen nach Anspruch 1, wobei die Sperrlage (100) ein erstes Ende (110) in dem Schulterbereich des Reifens (150) aufweist.

3. Luftreifen nach Anspruch 1 oder 2, wobei die Sperrlage (100) ein erstes Ende (110) aufweist, das von der axial äußersten Gürtelkante der Gürtelstruktur (160) axial einwärts gelegen ist.

4. Luftreifen nach wenigstens einem der vorhergehenden Ansprüche, wobei die Sperrlage (100) ein zweites Ende (120) aufweist, das zwischen der axial innersten Innenlage (1) und der äußeren Karkassenlage (5) oder der Endung (50, 60) der äußeren Karkassenlage (50) gelegen ist.

5. Luftreifen nach wenigstens einem der vorhergehenden Ansprüche, wobei die Sperrlage (100) ein zweites Ende (120) aufweist, das von dem ringförmigen Wulstelement (14) radial nach innen gelegen ist.

6. Luftreifen nach wenigstens einen der vorhergehenden Ansprüche, wobei die Sperrlage (100) mehrere parallele Verstärkungen aufweist, die einen Winkel mit Bezug auf die Äquatorebene des Reifens (150) in dem Bereich von 70-90 Grad oder in einem Bereich von 80 bis 88 Grad bilden.

7. Reifen nach wenigstens einem der vorhergehenden Ansprüche, wobei die Sperrlage (100) ein erstes Ende (110) aufweist, das in einer von der axial äußersten Gürtelkante der Gürtelstruktur (160) gemessenen Distanz Z von dem axial äußeren Ende der axial schmalsten Gürtellage der Gürtelstruktur (160) axial nach innen abschließt, wobei Z von 0,1* BW bis 0,25* BW reicht, wobei BW die maximale axiale Breite der Gürtelstruktur (160) ist.

8. Luftreifen nach Anspruch 7, wobei Z von 0,15* BW bis 0,20* BW reicht.

9. Luftreifen nach Anspruch 1, wobei der Reifen (150) zwei äußere Lagen (5, 6) aufweist, die beide ein in dem Bereich B gelegenes Abschlussende aufweisen.

10. Luftreifen nach Anspruch 1 oder 9, wobei die Sperrlage (100) das zweite Ende (120) aufweist, das von dem Abschlussende der wenigstens einen äußeren Lage (5, 6) axial nach außen oder von dem Abschlussende aller äußeren Lagen (5, 6) axial nach außen gelegen ist.

11. Luftreifen nach wenigstens einem der vorhergehenden Ansprüche, wobei die Sperrlage (110) eine Dicke von höchstens der Dicke der axial innersten inneren Lage (1, 2, 3, 4) oder der Dicke von wenigstens einer der inneren Lagen (1, 2, 3, 4) aufweist oder wobei die Sperrlage (110) eine Dicke in einem Bereich von 10 bis 60 Prozent oder 10 bis 30 Prozent der Dicke der axial innersten inneren Lage (1, 2, 3, 4) aufweist.

12. Luftreifen nach wenigstens einem der vorhergehenden Ansprüche, wobei der Reifen vier axial innere Lagen (1, 2, 3, 4) umfasst.

13. Luftreifen nach wenigstens einem der vorhergehenden Ansprüche, wobei der Lagenkord wenigstens einer und bevorzugt aller der Karkassenlagen (1, 2, 3, 4, 5, 6) aus Nylon ist oder dieses umfasst.

14. Luftreifen nach wenigstens einem der vorhergehenden Ansprüche, wobei der Reifen (150) ein Flugzeugreifen, bevorzugt ein Radialflugzeugreifen, ist.

## Revendications

1. Bandage pneumatique possédant une carcasse (22) et une structure de ceintures (160), la carcasse (22) comprenant un calandrage intérieur (13), au moins deux nappes internes (1, 2, 3, 4) qui viennent s'enrouler autour d'un élément annulaire (14) faisant office de talon à partir du côté interne en direction axiale de l'élément annulaire (14) faisant office de talon dans la direction du côté externe de ce dernier en direction axiale et qui s'étendent à l'extérieur en direction radiale de l'élément annulaire (14) faisant office de talon en direction du sommet du bandage pneumatique dans le but de former des portions respectives (10, 20, 30, 40) de retournement vers le haut, et au moins une nappe de carcasse externe (5, 6) qui s'étend vers l'intérieur en direction radiale à partir du sommet et vers l'extérieur en direction axiale de l'élément annulaire (14) faisant office de talon ; dans lequel ladite au moins une nappe de carcasse externe (5, 6) ne vient s'enrouler que de manière partielle autour de l'élément annulaire (14) faisant office de talon et se termine par une terminaison (50, 60) ; et dans lequel une nappe (100) faisant office de barrière est disposée entre le calandrage intérieur (13) et la nappe interne (1, 2, 3, 4) située le plus à l'intérieur en direction axiale ; et dans lequel au moins une nappe externe (5, 6) possède une extrémité terminale située dans une zone B ; dans lequel la zone B est définie par un premier plan (28) qui coupe le point central de l'élément annulaire (14) faisant office de talon et qui est parallèle à l'axe de rotation du bandage pneumatique et par un second plan (29) qui est perpendiculaire au premier plan (28) et qui coupe le point central de l'élément annulaire (14) faisant office de talon ; et dans lequel la zone B est située à l'intérieur du premier plan (28) en direction radiale et à l'intérieur du second plan (29) en direction axiale ; **caractérisé en ce que** la nappe (100) faisant office de barrière possède une seconde extrémité (120) située dans la zone B.

2. Bandage pneumatique selon la revendication 1, dans lequel la nappe (100) faisant office de barrière possède une première extrémité (110) dans la zone du bandage pneumatique (150) faisant office d'épaulement.

3. Bandage pneumatique selon la revendication 1 ou 2, dans lequel la nappe (100) faisant office de barrière possède une première extrémité (110) disposée à l'intérieur en direction axiale du bord de ceinture situé le plus à l'extérieur en direction axiale de la structure de ceintures (160).

4. Bandage pneumatique selon au moins une des revendications précédentes, dans lequel la nappe (100) faisant office de barrière possède une seconde extrémité (120) disposée entre la nappe interne (1) la plus à l'intérieur en direction axiale et la nappe de carcasse externe (5) ou la terminaison (50, 60) de la nappe de carcasse externe (50).

5. Bandage pneumatique selon au moins une des revendications précédentes, dans lequel la nappe (100) faisant office de barrière possède une seconde extrémité (120) disposée à l'intérieur en direction radiale de l'élément annulaire (14) faisant office de talon.

6. Bandage pneumatique selon au moins une des revendications précédentes, dans lequel la nappe (100) faisant office de barrière possède plusieurs renforcements parallèles qui forment un angle par rapport au plan équatorial du bandage pneumatique (150) dans la plage de 70 à 90 degrés ou dans une plage de 80 à 88 degrés.

7. Bandage pneumatique selon au moins une des revendications précédentes, dans lequel la nappe (100) faisant office de barrière possède une première extrémité (110) qui se termine à l'intérieur en direction axiale de l'extrémité externe en direction axiale de la nappe de ceinture la plus étroite en direction axiale de la structure de ceintures (160) à une distance Z telle que mesurée à partir du bord de ceinture le plus externe en direction axiale de la structure de ceintures (160) ; dans lequel Z se situe dans la plage de 0,1*BW à 0,25*BW, BW représentant la largeur axiale maximale de la structure de ceintures (160).

8. Bandage pneumatique selon la revendication 7, dans lequel Z se situe dans la plage de 0,15*BW à 0,20*BW.

9. Bandage pneumatique selon la revendication 1, dans lequel le bandage pneumatique (150) possède deux nappes externes (5, 6) qui toutes deux possèdent une extrémité terminale située dans la zone B.

10. Bandage pneumatique selon la revendication 1 ou 9, dans lequel la nappe (100) faisant office de barrière possède la seconde extrémité (120) disposée à l'extérieur en direction axiale de l'extrémité terminale de ladite au moins une nappe externe (5, 6) ou à l'extérieur en direction axiale de l'extrémité terminale de la totalité des nappes externes (5, 6).

11. Bandage pneumatique selon au moins une des revendications précédentes, dans lequel la nappe (100) faisant office de barrière possède une épaisseur inférieure ou égale à l'épaisseur de la nappe interne (1, 2, 3, 4) située le plus à l'intérieur en direction axiale ou à l'épaisseur d'au moins une des nappes internes (1, 2, 3, 4) ; ou dans lequel la nappe (100) faisant office de barrière possède une épaisseur dans la plage de 10 à 60 % ou de 10 à 30 % de l'épaisseur de la nappe interne (1, 2, 3, 4) située le plus à l'intérieur en direction axiale.

12. Bandage pneumatique selon au moins une des revendications précédentes, dans lequel le bandage pneumatique comprend quatre nappes internes en direction axiale (1, 2, 3, 4).

13. Bandage pneumatique selon au moins une des revendications précédentes, dans lequel le câblé de nappe d'au moins une des nappes de carcasse (1, 2, 3, 4, 5, 6), et de préférence de la totalité desdites nappes, représente ou comprend du nylon.

14. Bandage pneumatique selon au moins une des revendications précédentes, dans lequel le bandage pneumatique (150) représente un bandage pneumatique pour aéroplane, de préférence un bandage pneumatique pour aéroplane du type à nappe radiale.
